# FASCICULE DE BREVET EUROPEEN

(11) **EP 3 407 587 B1**
(45) Date de publication et mention de la délivrance du brevet: **08.04.2020**
(21) Numéro de dépôt: 18168366.5
(22) Date de dépôt: 20.04.2018
(51) Int. Cl.: H04M 9/02

(54) **INTERPHONE POUR UNE RÉSIDENCE**
GEGENSPRECHANLAGE FÜR WOHNUNGEN
INTERPHONE FOR A RESIDENCE

(30) Priorité: 22.05.2017 FR 1754534
(43) Date de publication de la demande: 28.11.2018
(73) Titulaire: Cogelec, 85290 Mortagne-sur-Sèvre (FR)
(72) Inventeur: LECLERC, Roger, 85130 Les Landes Genusson (FR)
(74) Mandataire: Colombo, Michel

(56) Documents cités:
- DE-A1- 10 030 104
- ES-A1- 2 180 429
- FR-A1- 2 558 325
- FR-A1- 2 896 651

## Description

L'invention concerne un interphone pour une résidence ainsi qu'un porte-étiquettes pour cet interphone.

Des interphones connus comportent :
- un haut-parleur et un microphone,
- un porte-étiquette comportant :
   - un écran commun dont la surface d'affichage est divisible en n régions d'affichage, ces régions d'affichage étant séparées les unes des autres par des interstices d'au moins 2 millimètres de large, où n est un nombre entier supérieur ou égal à trois,
   - plusieurs boutons d'appel réalisés chacun à l'aide d'un bouton poussoir disposé sur le pourtour de l'écran à proximité d'une région respective d'affichage de l'écran, chacun de ces boutons poussoirs étant déplaçable de façon réversible par le doigt d'un visiteur entre une position enfoncée et une position de repos,
- une unité de commande programmée pour :
   - commander l'affichage simultané, dans chacune des régions d'affichage, d'un identifiant d'un appartement situé à l'intérieur de la résidence,
   - en réponse au déplacement d'un des boutons poussoirs jusqu'à sa position enfoncée, déclencher l'établissement d'une communication vocale par l'intermédiaire du haut-parleur et du microphone entre un visiteur présent devant l'interphone et un résident situé à l'intérieur de l'appartement dont l'identifiant est affiché à l'intérieur de la région d'affichage la plus proche du bouton poussoir enfoncé,
- une platine anti-vandale présentant une face avant destinée à être directement exposée à l'extérieur, cette platine comportant des trous pour le passage de chacun des boutons poussoirs et une fenêtre traversante située en face de l'écran commun de sorte que chaque région d'affichage à proximité d'un bouton poussoir est visible depuis l'extérieur par le visiteur.

Par exemple, un tel interphone connu est décrit dans la demande ES2180429A. Cet interphone présente de nombreux avantages. En particulier, il utilise des étiquettes électroniques à la place des étiquettes papiers. Les noms des résidents peuvent donc facilement être modifiés soit localement soit à distance.

Pour former ces étiquettes électroniques, l'interphone de la demande ES2180429A utilise un seul écran commun à plusieurs étiquettes électroniques. Ainsi, le nombre d'écrans à installer à l'intérieur de l'interphone est réduit. Cela facilite grandement la fabrication du porte-étiquette en grande série.

En tant que bouton d'appel, l'interphone de la demande ES2180429A utilise des boutons poussoirs. Les boutons poussoirs, contrairement aux écrans tactiles, sont plus faciles à utiliser, par exemple, par des personnes souffrant de déficiences visuelles ou d'autres handicaps. En particulier, la position enfoncée du bouton poussoir est directement perceptible par le doigt du visiteur.

Toutefois, l'interphone de la demande ES2180429A présente l'inconvénient d'être particulièrement fragile vis-à-vis de certains actes de vandalisme. En particulier, étant donné la grande surface d'affichage de l'écran, il est particulièrement facile de frapper sur cet écran avec un marteau assez gros pour que la puissance du choc soit suffisante pour que le marteau s'enfonce à l'intérieur de l'écran et atteigne son circuit électronique. Ce circuit électronique se trouve derrière la vitre de l'écran. Or, si le circuit électronique est endommagé, l'écran ne peut plus afficher le nom des résidents. Cet acte de vandalisme est plus grave que le simple fait de briser avec un marteau la vitre de l'écran. En effet, généralement, même si la vitre de l'écran est brisée, l'écran reste capable d'afficher les noms des résidents. Ainsi, l'interphone reste utilisable en attendant une intervention de maintenance pour remplacer la vitre de l'écran. Ce n'est pas le cas si le circuit électronique de l'écran est endommagé.

De l'état de la technique est également connu de FR2558325A1, FR2896651A1 et DE10030104A1.

Il est donc souhaitable de proposer un interphone qui conserve les avantages de l'interphone de la demande ES2180429A tout en étant plus résistant aux actes de vandalisme.

À cet effet, l'invention concerne un tel interphone conforme à la revendication 1.

Grâce aux barreaux principaux, il est plus difficile d'endommager le circuit électronique de l'écran à l'aide d'un coup de marteau. En effet, pour atteindre le circuit électronique et le casser, il faut taper en plein centre d'une des ouvertures sans toucher l'un des barreaux principaux. Or, les largeurs des ouvertures sont petites, c'est-à-dire inférieures à 3 cm, de sorte que taper en plein centre de l'ouverture avec une puissance suffisante pour pénétrer à l'intérieur de l'écran et endommager le circuit électronique n'est pas une opération simple à réaliser. On rappelle à ce sujet que pour atteindre le circuit électronique, l'énergie cinétique requise est importante, ce qui nécessite l'utilisation d'un marteau particulièrement lourd et encombrant.

Dans le cas contraire, c'est-à-dire si le marteau touche l'un des barreaux principaux, il ne peut pas s'enfoncer suffisamment à l'intérieur de l'écran pour endommager son circuit électronique. Au mieux, en tapant sur un des barreaux principaux, le coup de marteau peut fissurer la vitre de l'écran, ce qui généralement n'est pas suffisant pour empêcher l'affichage des identifiants d'appartements dans chacune des régions d'affichage.

La grille n'empêche pas le visiteur de voir les régions d'affichage car les barreaux principaux s'étendent seulement en vis-à-vis des interstices entre ces régions d'affichage.

Enfin, l'interphone revendiqué conserve les avantages de l'interphone de la demande ES2180429A. En particulier, il utilise des boutons poussoirs et un seul écran commun à plusieurs de ces boutons poussoirs.

L'invention a également pour objet un porte-étiquette pour l'interphone revendiqué conforme à la revendication 2.

Les modes de réalisation de ce porte-étiquette peuvent comporter une ou plusieurs des caractéristiques des revendications dépendantes.

L'invention sera mieux comprise à la lecture de la description qui va suivre, donnée uniquement à titre d'exemple non limitatif et faite en se référant aux dessins sur lesquels :
- la figure 1 est une illustration schématique d'un système de contrôle d'accès à une résidence comportant un interphone ;
- la figure 2 est une illustration schématique et en coupe vertical de l'interphone du système de la figure 2 ;
- la figure 3 est une illustration schématique, en vue éclatée, d'un porte-étiquette de l'interphone de la figure 2 ;
- la figure 4 est une illustration schématique, en coupe verticale, du porte-étiquette de la figure 3 ;
- la figure 5 est une illustration schématique et en vue de face du porte-étiquette de la figure 3 ;
- les figures 6 et 7 sont des illustrations schématiques en vue de face de deux autres modes de réalisation possibles du porte-étiquette de la figure 3.

Dans ces figures, les mêmes références sont utilisées pour désigner les mêmes éléments. Dans la suite de cette description, les caractéristiques et fonctions bien connues de l'homme du métier ne sont pas décrites en détails.

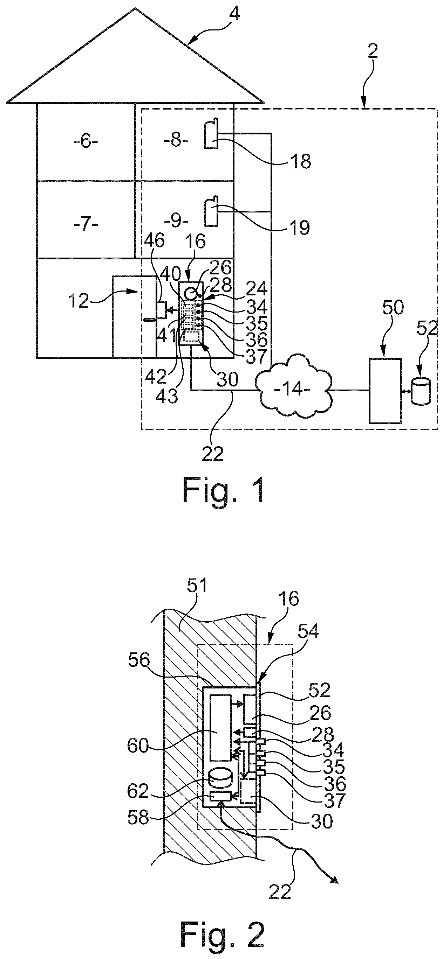

La figure 1 représente un système 2 de contrôle d'accès à une résidence 4. Typiquement, la résidence 4 est un habitat collectif comportant plusieurs appartements ou logements. Par exemple, la résidence 4 comporte au moins quatre appartements 6, 7, 8 et 9.

La résidence 4 est équipée d'une porte d'accès 12 à la résidence.

Le système 2 permet d'autoriser et, en alternance, d'interdire l'accès à la résidence 4 à un visiteur.

A cet effet, chaque résident de la résidence 4 est équipé d'un combiné audiophonique raccordé, par l'intermédiaire d'un réseau 14 de transmission d'informations, à un interphone 16 situé à proximité de la porte 12. Typiquement, l'interphone 16 est situé à moins de 10 m et, le plus souvent, à moins de 5 m ou 3 m de la porte 12.

Pour simplifier l'illustration, seuls deux combinés audiophoniques 18, 19 ont été représentés. Ces combinés sont par exemples des téléphones mobiles raccordés au réseau 14 par l'intermédiaire d'une liaison sans fil.

Par exemple, le réseau 14 est un réseau téléphonique public. Il peut s'agir d'un réseau à commutation de paquets ou d'un réseau à commutation de circuits. Ici, il s'agit d'un réseau à commutation de paquets.

L'interphone 16 permet à un visiteur présent devant cet interphone d'établir une conversation audiophonique avec le résident appelé. A cet effet, l'interphone 16 est raccordé au réseau 14 par l'intermédiaire d'une liaison 22 de transmission d'informations. De préférence, cette liaison 22 est également une liaison de transmission d'informations sans fil.

L'interphone 16 est équipé :
- d'un porte-étiquettes 24,
- d'un haut-parleur 26, et
- d'un microphone 28.

L'interphone 16 peut également comprendre des équipements optionnels 30 tels qu'un lecteur de badges permettant d'autoriser et, en alternance, d'interdire l'accès à la résidence 4 en fonction d'informations contenues dans un badge présenté devant ce lecteur.

Le porte-étiquettes 24 comprend ici autant de boutons d'appel que d'appartements à l'intérieur de la résidence 4. Ici, pour simplifier l'illustration, seuls quatre boutons d'appel 34 à 37 ont été représentés. Chaque bouton d'appel déclenche, lorsqu'il est activé, un appel vers le combiné d'un appartement particulier. Ici, les boutons sont des boutons poussoirs qui sont activés lorsqu'un visiteur les enfonce. Ainsi, dans ce mode de réalisation, chaque bouton d'appel est déplaçable, par le doigt du visiteur, entre une position de repos et une position enfoncée.

Le porte-étiquettes 24 comprend également une étiquette électronique respective associée à chaque bouton d'appel. Chaque étiquette électronique est associée au bouton d'appel qui est le plus proche de cette étiquette. Ici, le porte-étiquettes 24 comprend quatre étiquettes électroniques 40 à 43 associées, respectivement, aux boutons d'appel 34 à 37.

Chacune de ces étiquettes 40 à 43 affiche un identifiant de l'appartement appelé lorsque le bouton d'appel associé à cette étiquette est enfoncé. Typiquement, l'identifiant est le nom de la personne qui réside dans l'appartement à appeler. En pratique, chaque étiquette correspond à une région d'affichage respective d'un écran.

Le système 2 comprend également un mécanisme 46 de verrouillage et, en alternance, de déverrouillage de la porte 12. Ce mécanisme 46 est commandé par l'interphone 16 en réponse à la réception d'une commande d'ouverture ou de fermeture de la porte 12 transmise par l'un des combinés 18 et 19. Ainsi, dans ce mode de réalisation, l'interphone 16 remplit en plus les fonctions d'un portier électrique.

Le système 2 comprend également un serveur 50 raccordé à l'interphone 16 par l'intermédiaire du réseau 14. Par exemple, ce serveur 50 permet de configurer et de commander à distance certaines fonctionnalités de l'interphone 16. A cet effet, le serveur 50 est associé à une mémoire 52 dans laquelle sont enregistrés différents paramètres de configuration de l'interphone 16 comme les identifiants d'appartement à afficher par chacune des étiquettes 40 à 43.

La figure 2 représente l'interphone 16 encastré dans un mur vertical 51 de la résidence 4. Seule la face avant 52 de cet interphone 16 est directement exposée et accessible depuis l'extérieur de la résidence 4. Cette face avant 52 s'étend dans un plan vertical. Ici, la face avant 52 de l'interphone 16 et du porte-étiquettes 24 sont confondues. Par exemple, cette face avant 52 est constituée par la face avant d'une même platine anti-vandale 54. Cette platine 54 forme la façade avant de l'interphone 16 qui est directement exposée à l'extérieur de la résidence. Une telle platine 54 est typiquement réalisée en métal de manière à résister aux différentes tentatives de vandalisme. Par exemple, cette platine est une plaque en inox de plus de 2 mm ou 3 mm d'épaisseur ou une plaque en aluminium de plus de 2 mm ou 4 mm d'épaisseur. Ici, la plaque 54 est une plaque d'aluminium de 2,5 mm d'épaisseur.

L'ensemble des composants électroniques qui constitue le haut-parleur 26, le microphone 28 et les équipements optionnels 30 sont situés derrière cette platine 54 à l'intérieur d'une niche 56 creusée dans l'épaisseur du mur 51.

L'interphone 16 comprend également, logé à l'intérieur de la niche 56 :
- un émetteur-récepteur 58 permettant de raccorder l'interphone 16 au réseau 14,
- une unité de commande 60 des différents équipements de l'interphone 16, et
- une mémoire 62 raccordée à l'unité 60 de commande.

L'unité 60 est un circuit électronique. Typiquement, ce circuit électronique comporte un microprocesseur programmable aptes à exécuter des instructions enregistrées sur un support d'enregistrement d'informations. A cet effet, les instructions nécessaires au fonctionnement de l'interphone 16 sont enregistrées dans la mémoire 62.

L'accès à l'intérieur de la niche 56 n'est possible qu'en ouvrant l'interphone 16. L'ouverture de l'interphone 16 consiste par exemple à déverrouiller, à l'aide d'un outillage spécial, la platine 54 pour que l'accès à l'intérieur de la niche 56 soit rendu possible. Un tel accès à l'intérieur de la niche 56 est uniquement prévu pour des opérations de maintenance de l'interphone 16. Cet accès est donc rendu volontairement difficile pour des personnes non habilitées à intervenir sur l'interphone 16.

Dans la suite de cette description, on désigne par l'avant et l'arrière, les côtés tournés, respectivement, vers l'extérieur et vers l'intérieur de la niche 56.

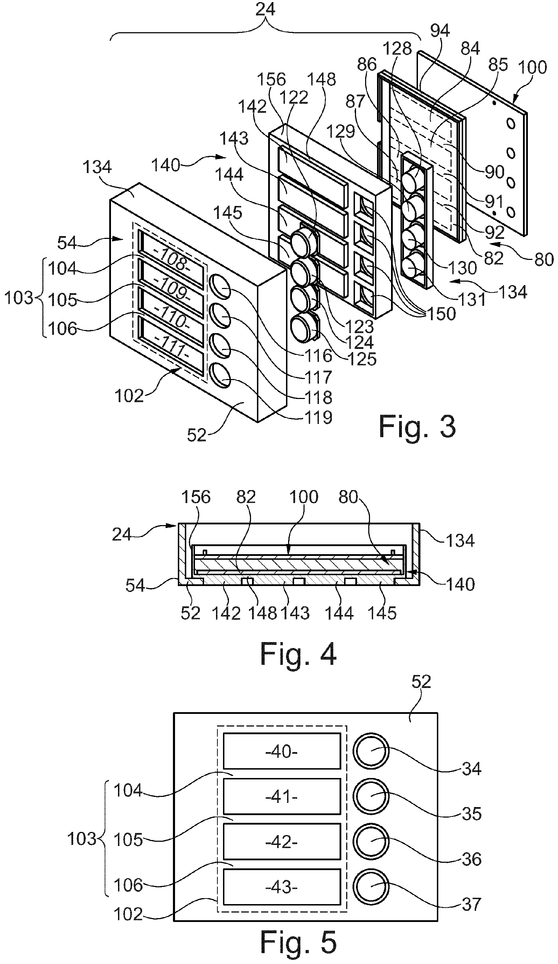

Les figures 3 et 4 représentent plus en détail le porte-étiquette 24 isolé du reste de l'interphone 16. Sur ces figures, seule la partie de la platine 54 correspondant au porte-étiquette 24 est représentée.

Le porte-étiquette 24 comporte un seul écran 80 présentant une seule surface d'affichage 82. Par exemple, la surface d'affichage 82 correspond à la face avant d'une vitre de l'écran. La surface 82 correspond à la plus petite zone de cet écran qui contient l'ensemble des pixels de l'écran 80. Ici, la surface 82 est par exemple rectangulaire. Par exemple, la largeur La₈₂ et la longueur Lo₈₂ de la surface 82 sont toutes les deux supérieures à 4 cm ou 5 cm. Ici, la largeur La₈₂ et la longueur Lo₈₂ sont égales, respectivement, à 52 mm et 77 mm. Dans ce mode de réalisation, la surface 82 comporte quatre régions d'affichage 84 à 87 qui correspondent, respectivement, aux régions des étiquettes 40 à 43 où est inscrit l'identifiant d'appartement. Ici, chaque région 84 à 87 est rectangulaire et s'étend principalement horizontalement. Dans cette description, on désigne par « largeur » et « longueur » d'une forme, respectivement, le plus petit côté et le plus long côté du rectangle de plus petite surface qui contient entièrement cette forme. Lorsque le rectangle s'étend principalement horizontalement, sa largeur est aussi appelée hauteur. Ces régions sont disposées les unes au-dessus des autres dans la direction verticale. Elles sont également toutes de même dimension. La largeur de chaque région 84 à 87 est inférieure à 3 cm et, de préférence, inférieure à 2,5 cm ou 2 cm. La largeur de chaque région 84 à 87 est également généralement supérieure à 8 mm ou 1 cm. Ici, la largeur de chaque région est égale à 15,5 mm.

La longueur de chaque région 84 à 87 est typiquement supérieure à 2 cm ou 3 cm et, de préférence, supérieure à 4 cm. La largeur des régions 84 à 87 est généralement inférieure à 8 cm ou 7 cm. Ici, la largeur des régions 84 à 87 est égale à 53 mm.

Les côtés parallèles et adjacents de deux régions immédiatement successives dans la direction verticale sont séparés par un interstice rectiligne. Les interstices qui séparent verticalement les régions 84 à 87 portent, dans l'ordre en allant du haut vers le bas, les références numériques 90 à 92.

Chaque interstice est ici une bande rectangulaire qui s'étend continûment entre les côtés adjacents de deux régions d'affichage. La largeur de cet interstice est typiquement supérieure à 2 mm et, de préférence, supérieure à 3 mm. Généralement, la largeur des interstices 90 à 92 est inférieure à 2 cm ou 1 cm. Ici, la largeur des interstices 90 à 92 est égale à 5 mm.

La surface d'affichage 82 est dite « continue » car l'écran 80 est capable d'afficher des informations en réponse à des commandes de l'unité 60, à n'importe quel endroit situé à l'intérieur de cette surface 82. En particulier, l'écran 80 est capable d'afficher des informations à l'intérieur de chacune des régions d'affichage 84 à 87 ainsi qu'à l'extérieur de ces régions d'affichage. Par exemple, l'écran 80 peut afficher des informations à l'intérieur des interstices 90 à 92. À cet effet, typiquement, la surface 82 est recouverte de pixels commandables individuellement.

Derrière la vitre de l'écran 80, celui-ci comporte un circuit électronique 94 qui comporte les pixels de cet écran et les composants électroniques nécessaires pour commander chacun de ces pixels.

Ici, l'écran 80 est assemblé sur un circuit imprimé 100 qui fait l'interface entre l'unité 60 et l'écran 80. Dans ce mode de réalisation, le circuit imprimé 100 comporte aussi les composants électriques et électroniques nécessaires à la détection de la position enfoncée de chacun des boutons 34 à 37.

L'écran 80 est situé derrière la platine 54. Dans ces conditions, pour que la surface 82 soit presque entièrement visible à travers cette platine 54, celle-ci comporte une fenêtre traversante 102. La surface 82 de l'écran 80 est en vis-à-vis de cette fenêtre 102. Ici, la fenêtre 102 est rectangulaire. Les dimensions de cette fenêtre 102 sont sensiblement égales aux dimensions de la surface 82. Par exemple, la largeur La₁₀₂ et la longueur Lo₁₀₂ de la fenêtre 102 sont comprises, respectivement, dans les intervalles [0,9La₈₂ ; 1,1La₈₂] et [0,9Lo₈₂ ; 1,1Lo₈₂], où La₈₂ et Lo₈₂ sont, respectivement, la largeur et la longueur de la surface 82. Ici, la largeur La₁₀₂ et la longueur Lo₁₀₂ sont égales, respectivement, à La₈₂ et Lo₈₂ à plus ou moins 1 mm près.

Pour rendre le porte-étiquette 24 plus résistant au vandalisme, la fenêtre 102 comporte une grille 103. La grille 103 comporte ici trois barreaux principaux 104 à 106 qui s'étendent chacun depuis un bord de la fenêtre 102 jusqu'à un bord opposé de cette fenêtre. Ici, chacun de ces barreaux principaux s'étend horizontalement. Chacun de ces barreaux principaux 104 à 106 s'étend seulement en face d'un interstice respectif 90 à 92. Ainsi, aucun des barreaux principaux ne s'étend devant l'une des régions d'affichage 84 à 87. Dès lors, la projection orthogonale de chacun des barreaux principaux 104 à 106 sur la surface 82 de l'écran 80 est entièrement située en dehors des régions d'affichage 84 à 87. Plus précisément, la projection orthogonale de chacun des barreaux principaux 104 à 106 est principalement située à l'intérieur d'un interstice respectif 90 à 92. Typiquement, ces barreaux principaux sont des parallélépipèdes. Ici, la largeur de chaque barreau principal est égale à largeur de l'interstice en face duquel il se situe. Ainsi, chaque barreau principal recouvre la totalité de l'interstice en face duquel il se situe. La largeur de chacun des ces barreaux principaux est donc supérieure à 2 mm ou 3 mm et inférieure à 2 cm ou 1 cm. De préférence, chaque interstice se trouve derrière un barreau principal.

De préférence, chaque barreau principal affleure la face avant 52 et affleure également la face arrière de la platine 54. Ainsi, l'épaisseur de chaque barreau principal est égale à l'épaisseur de la platine 54. L'épaisseur des barreaux principaux est donc supérieure à 2 mm ou 4 mm. Ici, les barreaux principaux sont réalisés dans le même matériau que celui de la platine 54 et ne forment qu'un seul bloc de matière avec cette platine 54. Typiquement, les barreaux principaux sont obtenus en découpant les ouvertures traversantes 108 à 111 dans la platine 54.

Ces barreaux principaux 104 à 106 divisent la fenêtre 102 en plusieurs ouvertures 108 à 111 situées chacune en face d'une région d'affichage respective. Chacune de ces ouvertures 108 à 111 laisse apparaître au moins 80 % ou 90 % ou 95 % de la surface de la région d'affichage 84 à 87 en face de laquelle elle est située. Ici, ces ouvertures 108 à 111 sont rectangulaires. Leur largeur est inférieure à 3 cm ou 2 cm. Ici, la largueur et la longueur de chacune de ces ouvertures sont égales, respectivement, à la largeur et la longueur de la région d'affichage en face de laquelle elle se situe à plus ou moins 1 mm près.

La platine 54 comporte aussi quatre trous 116 à 119 pour le passage des boutons poussoirs 34 à 37. Par exemple, chaque bouton poussoir 34 à 37 comporte une touche rigide 122 à 125 montée à coulissement à l'intérieur d'un trou 116 à 119 respectif. Chacune de ces touches 122 à 125 est montée sur une protubérance respective 128 à 131 d'une membrane 134 en matériau souple. Par exemple, lorsqu'un bouton poussoir est enfoncée, la portion de la membrane en vis-à-vis de la touche se déforme, ce qui entraîne la fermeture d'un contact électrique lorsque le bouton poussoir atteint sa position enfoncée.

Enfin, dans ce mode de réalisation, la platine 54 comporte des bordures verticales et horizontales en saillie sur sa face arrière. Ces bordures délimitent un logement à l'intérieur duquel est reçu l'écran 80. Ces bordures sont collectivement désignées par la référence 134 sur les figures 3 et 4.

Dans ce mode de réalisation, le porte-étiquette 24 comporte en plus une plaque 140 de protection supplémentaire interposée entre la surface 82 et la face arrière de la platine 54. La plaque 140 recouvre toutes les régions d'affichage 84 à 87. Ainsi, pour que les informations affichées dans ces régions d'affichage soient visibles par un visiteur, elles comportent en face de chacune des régions d'affichage une paroi transparente. Ces parois transparentes en vis-à-vis des régions 84 à 87, portent, respectivement, les références numériques 142 à 145. Ici, les parois transparentes 142 à 145 sont rectangulaires et identiques les unes aux autres. Ainsi, seule la paroi transparente 142 est maintenant décrite plus en détail.

Dans ce mode de réalisation, la paroi transparente 142 pénètre l'intérieur de l'ouverture 108. A cet effet, la largeur La₁₄₂ et la longueur Lo₁₄₂ de la paroi transparente 142 sont égales, respectivement, à La₁₀₈ - ε et Lo₁₀₈ - ε où :
- La₁₀₈ et Lo₁₀₈ sont, respectivement, la largeur et la longueur de l'ouverture 108, et
- ε est une constante strictement positive généralement inférieure à 1 mm et, de préférence, inférieure à 0,5 mm ou 0,3 mm.

Ici, la paroi transparente 142 est en saillie sur un font plat 148 de la plaque 140. Ainsi, dans une position insérée, dans laquelle le fond 148 est en appui sur la face arrière de la platine 54, la paroi 142 est introduite à l'intérieur de l'ouverture 108. De préférence, lorsque la paroi transparente 142 est dans la position insérée, sa face avant affleure la face avant 52 de la platine 54 comme représenté sur la figure 4. Ceci limite les aspérités présentes sur la face avant 52 et accroît donc la résistance aux vandalismes du porte-étiquette 24.

Le fond 148 forme autour de chaque paroi transparente 142 à 145 un épaulement qui vient en appui sur la face arrière de la platine 54 dans la position insérée. Plus précisément, cet épaulement vient en appui sur la face arrière d'au moins l'un des barreaux principaux et/ou d'un bord de la fenêtre 102. Ceci empêche l'arrachage des parois transparentes 142 à 145.

Le fond 148 maintient les parois transparentes 142 à 145 fixées les unes aux autres sans degré de liberté. Par exemple, le fond 148 et les parois 142 à 145 sont réalisés dans le même matériau transparent tel que du verre ou du plastique transparent à la lumière. Ici, le fond 148 et les parois transparentes 142 à 145 ne forment qu'un seul bloc de matière.

Dans ce mode de réalisation, le fond 148 comporte aussi des trous traversants pour le passage des boutons poussoirs 34 à 37. Sur la figure 3, ces trous traversants sont désignés collectivement à l'aide de la référence numérique 150.

Enfin, la plaque 140 comporte aussi une bordure 156 qui se prolonge vers l'arrière à partir de la périphérie du fond 148 pour former un logement dans lequel sont reçus l'écran 80 et le circuit imprimé 100. Par exemple, la bordure 156 ne forme qu'un seul bloc de matière avec le fond 148.

La figure 5 représente la face avant du porte-étiquette 24 lorsque les différents éléments précédemment décrits en référence à la figure 3 sont assemblés. L'assemblage l'un derrière l'autre de la paroi transparente 142 et de la région d'affichage 84 forme l'étiquette électronique 40.

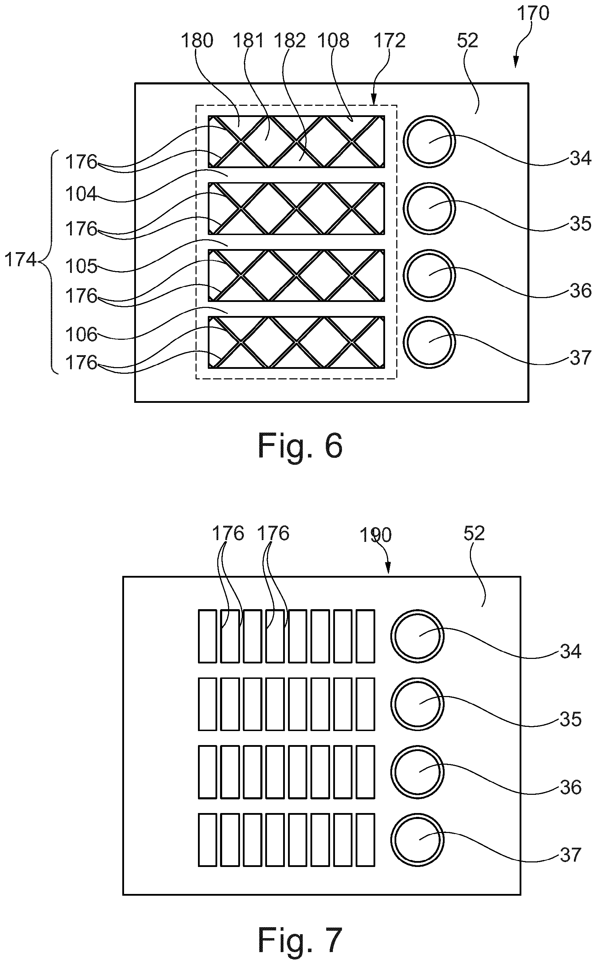

La figure 6 représente un porte-étiquette 170 identique au porte-étiquette 24 sauf que la fenêtre 102 est remplacée par une fenêtre 172. La fenêtre 172 est identique à la fenêtre 102 sauf que la grille 103 est remplacée par une grille 174. La grille 174 est ici identique à la grille 103 sauf qu'elle comporte en plus des barreaux secondaires désignés collectivement par la référence numérique 176. Les barreaux 176, contrairement aux barreaux principaux, s'étendent chacun devant une région d'affichage respective de l'écran 80 et non pas devant les interstices 90 à 92. Pour cela, chaque barreau secondaire s'étend ici en diagonal depuis un bord de la fenêtre 172 ou depuis un barreau principal vers un autre bord de la fenêtre 172 ou un autre barreau principal. Par exemple, les barreaux secondaires sont rectilignes.

Les barreaux secondaires 176 divisent chaque ouverture 108 à 111 en une multitude de carreaux. Sur la figure 6, à titre d'exemple, trois de ces carreaux de l'ouverture 108 sont désignés par les références numériques 180 à 182.

La largeur La₁₇₆ de chaque barreau secondaire 176 est strictement inférieure à la largeur des barreaux principaux et, généralement, deux fois inférieure à la largeur La92 des barreaux principaux. Typiquement, la largeur La₁₇₆ est inférieure à 1,5 mm ou 1 mm. De cette façon, la présence des barreaux secondaires gêne peu la visibilité de la région d'affichage.

La surface de chaque carreau délimité par les barreaux secondaires est généralement inférieure à 2000 mm² ou 1600 mm² et, dans certains modes de réalisation, inférieure à 300 mm² ou 200 mm².

Ces barreaux secondaires sont typiquement réalisés de la même façon que les barreaux principaux. Ici, ils ne forment donc qu'un seul bloc de matière avec la platine 54. Ces barreaux secondaires rendent encore plus difficile l'enfoncement d'un marteau à l'intérieur de l'écran suffisant pour atteindre et détruire le circuit électronique 94.

La figure 7 représente un porte-étiquette 190 identique au porte-étiquette 170 sauf que les barreaux secondaires 176 s'étendent tous verticalement et sont répartis, dans la direction horizontale, à intervalle régulier les uns à côté des autres. L'intervalle régulier est par exemple suffisamment grand pour pouvoir afficher au moins un caractère alphanumérique dans chacun des carreaux délimités par les barreaux secondaires dans cette configuration. Par exemple, l'intervalle régulier est supérieur ou égal à 3 mm ou 4 mm et généralement inférieur à 10 mm ou 8 mm.

### Variantes de l'interphone :

Les équipements optionnels 30 peuvent aussi comporter :
- un clavier permettant à un aveugle de composer un code d'appel d'un des combinés d'un résident, ou
- un écran supplémentaire, par exemple, pour l'affichage d'informations à destination des résidents.

L'interphone peut comporter des éléments supplémentaires tels qu'une caméra et un écran de manière à permettre l'établissement d'une vidéo conférence avec le résident appelé.

En variante, l'interphone peut communiquer avec le téléphone mobile du résident par l'intermédiaire d'une liaison courte distance telle qu'une liaison Bluetooth, Wi-Fi ou NFC (« Near Field Communication ») ou autres. Dans ce cas, le serveur 50 transmet au préalable la demande de déverrouillage au téléphone mobile du résident. Puis, lorsque le téléphone mobile est relié à l'interphone 16 par la liaison courte distance, il transmet directement la demande de déverrouillage préalablement enregistrée.

Une partie ou la totalité des fonctionnalités décrites ici de l'unité de commande 60 peut être implémentée dans le circuit imprimé 100 du porte-étiquette.

Le système de contrôle d'accès ne comporte pas nécessairement de serveur tel que le serveur 50. Dans ce cas les fonctionnalités du serveur 50 sont directement intégrées dans l'interphone 16.

De même, le système de contrôle d'accès peut utiliser d'autres réseaux qu'un réseau public. Par exemple, les combinés audiophoniques peuvent être raccordés à l'interphone électrique à l'aide d'un réseau local de la résidence.

### Variantes du porte-étiquette :

Un autre identifiant que le nom du résident peut être inscrit sur l'étiquette pour identifier l'appartement à appeler. Par exemple, il peut s'agir du numéro de l'appartement ou de toute autre information apte à permettre l'identification de l'appartement appelé par un visiteur.

La face avant du porte-étiquettes 24 peut être, comme ici, confondue et formée d'un seul bloc de matière avec la face avant de l'interphone. Toutefois, la face avant du porte-étiquettes 24 peut également être réalisée dans un bloc de matière différent qui est ensuite ajusté dans un logement prévu à cet effet dans la face avant de l'interphone. Dans ce dernier cas, le porte-étiquettes peut être fabriqué et remplacé indépendamment de la face avant de l'interphone.

En variante, les étiquettes sont disposées les unes par rapport aux autres de manière différente. Par exemple, certaines étiquettes sont disposées les unes à côté des autres dans une direction horizontale. Il n'est pas non plus nécessaire que les étiquettes soient disposées à intervalle régulier dans la direction verticale ou horizontale. Le nombre d'étiquettes électroniques peut être aussi petit que deux ou trois. Toutefois, il est généralement supérieur à quatre ou cinq. Le nombre d'étiquettes du porte-étiquette est aussi généralement inférieur à cent. Le porte-étiquette 24 peut facilement être adapté pour obtenir ces différentes dispositions des étiquettes sans qu'il soit nécessaire pour cela d'utiliser plusieurs écrans.

La bordure 134 peut être omise.

### Variantes de l'écran :

Dans un autre mode de réalisation, le porte-étiquette comporte plusieurs écrans communs chacun à plusieurs boutons d'appel. Toutefois, de préférence, le porte-étiquette comporte un seul écran.

Les régions d'affichage et les ouvertures correspondantes ne sont pas nécessairement rectangulaires. Par exemple, les régions d'affichage et les ouvertures peuvent être ellipsoïdales ou avoir d'autres formes. Dans ce cas, la largeur et la longueur de telles régions ou de tels éléments non rectangulaires sont égales, respectivement, à la largeur et à la longueur du plus petit rectangle contenant entièrement cet élément.

Les régions d'affichage sont les seules régions de l'écran 80 visibles par le visiteur. A priori, il y a donc peu d'intérêts à commander l'écran 80 pour qu'il affiche aussi des informations en dehors de ces régions d'affichage. Toutefois, si nécessaire, l'écran 80 peut aussi être commandé pour afficher des informations en dehors des régions d'affichage et, en particulier, à l'intérieur des interstices 90 à 92.

### Variantes de la plaque 140 :

Les parois transparentes 142 à 145 ne sont pas nécessairement en saillies sur le fond 148. Dans ce dernier cas, les parois transparentes ne pénètrent pas à l'intérieur des ouvertures. Typiquement, leurs dimensions sont alors strictement supérieures aux dimensions de l'ouverture en face de laquelle elles sont situées.

Le fond 148 commun à toutes les parois transparentes peut être omis. Dans ce cas, chaque paroi transparente est entourée de son propre épaulement et peut être manipulée et déplacée indépendamment des autres parois transparentes.

Les dimensions de la plaque 140 peuvent être réduites pour recouvrir uniquement la surface 82. Dans ce cas, les trous 150 peuvent être omis.

La bordure 156 peut être omise.

Dans une variante simplifiée, la plaque 140 est omise. Dans ce cas, il n'existe aucune paroi transparente interposée entre l'extérieur et la surface 82 de l'écran 80.

### Avantages des différents modes de réalisation décrits :

La présence des parois transparentes 142 à 145 qui affleurent la face 52 permet de limiter les aspérités de la face extérieure du porte-étiquette. Grâce à cela, la face 52 est plus lisse. Le fait que la face 52 soit lisse, la rend plus résistante vis-à-vis des tentatives de vandalisme. En effet, les aspérités sont plus vulnérables aux tentatives de détérioration à l'aide d'un marteau ou d'un tournevis. De plus, les parois transparentes répartissent l'énergie cinétique d'un coup de marteau sur une surface plus grande, ce qui rend plus difficile d'atteindre avec un tel marteau le circuit électronique 94 de l'écran.

La présence de barreaux secondaires en plus des barreaux principaux rend encore plus difficile d'arriver à endommager le circuit électronique 94 de l'écran à l'aide d'un coup de marteau.

L'utilisation d'un fond commun 148 qui relie mécaniquement les différentes parois transparentes simplifie l'assemblage de ces parois transparentes à l'intérieur du porte-étiquette.

## Revendications

1. Interphone pour une résidence comportant :
- un haut-parleur (26) et un microphone (28),
- un porte-étiquette (24 ; 170 ; 190) comportant :
• un écran commun (80) dont la surface d'affichage (82) est divisible en n régions d'affichage (84-87) et dont la largeur est supérieure à 4 cm, ces régions d'affichage étant séparées les unes des autres par des interstices (90-92) d'au moins 2 millimètres de large, où n est un nombre entier supérieur ou égal à trois,
• plusieurs boutons d'appel (34-37), réalisés chacun à l'aide d'un bouton poussoir, disposés sur le pourtour de l'écran à proximité d'une région respective d'affichage de l'écran, chacun des boutons poussoirs étant déplaçable de façon réversible par le doigt d'un visiteur entre une position enfoncée et une position de repos,
- une unité (60) de commande programmée pour :
• commander l'affichage simultané, dans chacune des régions d'affichage (84-87), d'un identifiant d'un appartement situé à l'intérieur de la résidence,
• en réponse au déplacement d'un des boutons poussoirs jusqu'à sa position enfoncée, déclencher l'établissement d'une communication vocale par l'intermédiaire du haut-parleur (26) et du microphone (28) entre un visiteur présent devant l'interphone et un résident situé à l'intérieur de l'appartement dont l'identifiant est affiché à l'intérieur de la région d'affichage la plus proche du bouton poussoir enfoncé,
- une platine anti-vandale (54) présentant une face avant (52) destinée à être directement exposée à l'extérieur, cette platine comportant des trous (116-119) pour le passage de chacun des boutons poussoirs et une fenêtre traversante (102) située en face de l'écran commun (80) de sorte que chaque région d'affichage à proximité d'un bouton poussoir est visible depuis l'extérieur par le visiteur,
**caractérisé en ce que** la fenêtre comporte une grille (103) qui divise cette fenêtre (102) en au moins n ouvertures (108-111), chacune de largeur inférieure à 3 centimètres, cette grille comportant à cet effet des barreaux principaux (104-106) qui séparent les ouvertures les unes des autres, chaque barreau principal s'étendant uniquement en vis-à-vis d'un interstice (90-92) respectif entre deux régions d'affichage (84-87).

2. Porte-étiquette pour un interphone conforme à la revendication 1, ce porte-étiquette comportant :
- un écran commun (80) dont la surface d'affichage (82) est divisible en n régions d'affichage (84-87) et dont la largeur est supérieure à 4 cm, ces régions d'affichage étant séparées les unes des autres par des interstices (90-92) d'au moins 2 millimètres de large, où n est un nombre entier supérieur ou égal à trois,
- un circuit électronique (94) apte à afficher simultanément, dans chacune des régions d'affichage (84-87), un identifiant d'un appartement situé à l'intérieur de la résidence,
- plusieurs boutons d'appel (34-37), réalisés chacun à l'aide d'un bouton poussoir, disposés sur le pourtour de l'écran à proximité d'une région respective d'affichage de l'écran, chacun des boutons poussoirs étant déplaçable de façon réversible par le doigt d'un visiteur entre une position enfoncée et une position de repos,
- une platine anti-vandale (54) présentant une face avant (52) destinée à être directement exposée à l'extérieur, cette platine comportant des trous (116-119) pour le passage de chacun des boutons poussoirs et une fenêtre traversante (102) située en face de l'écran commun (80) de sorte que chaque région d'affichage à proximité d'un bouton poussoir est visible depuis l'extérieur par le visiteur,
**caractérisé en ce que** la fenêtre comporte une grille (103) qui divise cette fenêtre (102) en au moins n ouvertures (108-111), chacune de largeur inférieure à 3 centimètres, cette grille comportant à cet effet des barreaux principaux (104-106) qui séparent les ouvertures les unes des autres, chaque barreau principal s'étendant uniquement en vis-à-vis d'un interstice (90-92) respectif entre deux régions d'affichage (84-87).

3. Porte-étiquette selon la revendication 2, dans lequel, pour chaque ouverture, le porte-étiquette comporte une paroi (142-145) transparente à la lumière visible qui obstrue complètement cette ouverture (108-111) et qui affleure la face avant (52) de la platine, cette paroi transparente étant entourée, au moins sur une partie de sa périphérie, par un épaulement interposé entre la surface (82) de l'écran (80) et la face arrière d'un des barreaux principaux ou d'un bord de la platine.

4. Porte-étiquette selon la revendication 3, dans lequel le porte-étiquette comporte un fond commun (148) qui relie mécaniquement toutes les parois transparentes (142-145) de toutes les ouvertures les unes aux autres sans aucun degré de liberté, ce fond commun étant interposé entre la platine anti-vandale et la surface (82) de l'écran.

5. Porte-étiquette selon l'une quelconque des revendications 2 à 4, dans lequel la grille (103) comporte en plus des barreaux secondaires (176) qui s'étendent chacun en vis-à-vis d'une des régions d'affichage depuis un barreau principal situé d'un côté de la région d'affichage jusqu'à un autre barreau principal ou un bord de la fenêtre située d'un côté opposé de cette région d'affichage, la plus petite largeur de chaque barreau secondaire étant au moins deux fois inférieure à la plus petite largeur d'un barreau principal.

6. Porte-étiquette selon l'une quelconque des revendications 2 à 5, dans lequel la longueur de chaque ouverture (108-111) est supérieure à 4 centimètres.

## Patentansprüche

1. Gegensprechanlage für ein Wohngebäude, beinhaltend:
- einen Lautsprecher (26) und ein Mikrofon (28),
- einen Klingelschildhalter (24; 170; 190), beinhaltend:
• einen gemeinsamen Bildschirm (80), dessen Anzeigefläche (82) in n Anzeigebereiche (84-87) aufteilbar ist und dessen Breite größer als 4 cm ist, wobei diese Anzeigebereiche durch mindestens 2 Millimeter breite Zwischenräume (90-92) voneinander getrennt sind, wobei n eine ganze Zahl größer oder gleich drei ist,
• mehrere Klingeltasten (34-37), die jeweils mittels einer Drucktaste ausgeführt sind und am Umfang des Bildschirms in der Nähe eines jeweiligen Anzeigebereichs des Bildschirms angeordnet sind, wobei jede der Drucktasten durch den Finger eines Besuchers zwischen einer gedrückten Position und einer Ruheposition reversibel bewegbar ist,
- eine Steuereinheit (60), die für Folgendes programmiert ist:
• Steuern der gleichzeitigen Anzeige, in jedem der Anzeigebereiche (84-87), einer Kennung einer Wohnung, die sich im Wohngebäude befindet,
• als Reaktion auf die Bewegung einer der Drucktasten in ihre gedrückte Position, Auslösen der Herstellung einer Sprachkommunikation über den Lautsprecher (26) und das Mikrofon (28) zwischen einem vor der Gegensprechanlage anwesenden Besucher und einem Bewohner, der sich in der Wohnung befindet, deren Kennung in dem Anzeigebereich angezeigt wird, der der gedrückten Drucktaste am nächsten liegt,
- eine vandalismussichere Platte (54) mit einer Vorderseite (52), die dazu bestimmt ist, direkt nach außen hin freigelegt zu sein, wobei diese Platte Löcher (116-119) für den Durchgang jeder der Drucktasten und ein Durchgangsfenster (102) beinhaltet, das gegenüber dem gemeinsamen Bildschirm (80) angeordnet ist, derart, dass jeder Anzeigebereich in der Nähe einer Drucktaste von außen durch den Besucher sichtbar ist,
**dadurch gekennzeichnet, dass** das Fenster ein Gitter (103) beinhaltet, das das Fenster (102) in mindestens n Öffnungen (108-111) unterteilt, die jeweils eine Breite von weniger als 3 Zentimetern haben, wobei das Gitter zu diesem Zweck Hauptstäbe (104-106) aufweist, die die Öffnungen voneinander trennen, wobei sich jeder Hauptstab nur gegenüber einem jeweiligen Zwischenraum (90-92) zwischen zwei Anzeigebereichen (84-87) erstreckt.

2. Klingelschildhalter für eine Gegensprechanlage nach Anspruch 1, wobei der Klingelschildhalter Folgendes beinhaltet:
- einen gemeinsamen Bildschirm (80), dessen Anzeigefläche (82) in n Anzeigebereiche (84-87) aufteilbar ist und dessen Breite größer als 4 cm ist, wobei diese Anzeigebereiche durch mindestens 2 Millimeter breite Zwischenräume (90-92) voneinander getrennt sind, wobei n eine ganze Zahl größer oder gleich drei ist,
- eine elektronische Schaltung (94), die in der Lage ist, in jedem der Anzeigebereiche (84-87) gleichzeitig eine Kennung einer im Wohngebäude befindlichen Wohnung anzuzeigen,
- mehrere Klingeltasten (34-37), die jeweils mittels einer Drucktaste ausgeführt sind und am Umfang des Bildschirms in der Nähe eines jeweiligen Anzeigebereichs des Bildschirms angeordnet sind, wobei jede der Drucktasten durch den Finger eines Besuchers zwischen einer gedrückten Position und einer Ruheposition reversibel bewegbar ist,
- eine vandalismussichere Platte (54) mit einer Vorderseite (52), die dazu bestimmt ist, direkt nach außen hin freigelegt zu sein, wobei diese Platte Löcher (116-119) für den Durchgang jeder der Drucktasten und ein Durchgangsfenster (102) beinhaltet, das gegenüber dem gemeinsamen Bildschirm (80) angeordnet ist, derart, dass jeder Anzeigebereich in der Nähe einer Drucktaste von außen durch den Besucher sichtbar ist,
**dadurch gekennzeichnet, dass** das Fenster ein Gitter (103) beinhaltet, das das Fenster (102) in mindestens n Öffnungen (108-111) unterteilt, die jeweils eine Breite von weniger als 3 Zentimetern haben, wobei das Gitter zu diesem Zweck Hauptstäbe (104-106) beinhaltet, die die Öffnungen voneinander trennen, wobei sich jeder Hauptstab nur gegenüber einem jeweiligen Zwischenraum (90-92) zwischen zwei Anzeigebereichen (84-87) erstreckt.

3. Klingelschildhalter nach Anspruch 2, wobei der Klingelschildhalter für jede Öffnung eine für sichtbares Licht durchlässige Wand (142-145) beinhaltet, die diese Öffnung (108-111) vollständig bedeckt und die mit der Vorderseite (52) der Platte bündig ist, wobei diese transparente Wand zumindest auf einem Teil ihres Umfangs von einer Schulter umgeben ist, die zwischen der Oberfläche (82) des Bildschirms (80) und der Rückseite eines der Hauptstäbe oder einer Kante der Platte eingefügt ist.

4. Klingelschildhalter nach Anspruch 3, wobei der Klingelschildhalter einen gemeinsamen Boden (148) beinhaltet, der alle transparenten Wände (142-145) aller Öffnungen ohne jeglichen Freiheitsgrad mechanisch miteinander verbindet, wobei dieser gemeinsame Boden zwischen der vandalismussicheren Platte und der Oberfläche (82) des Bildschirms eingefügt ist.

5. Klingelschildhalter nach einem der Ansprüche 2 bis 4, wobei das Gitter (103) zusätzlich Nebenstäbe (176) beinhaltet, die sich jeweils gegenüber einem der Anzeigebereiche von einem auf einer Seite des Anzeigebereichs befindlichen Hauptstab zu einem anderen Hauptstab oder einer auf einer gegenüberliegenden Seite dieses Anzeigebereichs befindlichen Kante des Fensters erstrecken, wobei die kleinste Breite jedes Nebenstabs mindestens zweimal kleiner ist als die kleinste Breite eines Hauptstabs.

6. Klingelschildhalter nach einem der Ansprüche 2 bis 5, wobei die Länge jeder Öffnung (108-111) größer als 4 Zentimeter ist.

## Claims

1. Intercom for a residential building including:
- a speaker (26) and a microphone (28);
- a label holder (24; 170; 190) including:
• a common screen (80), the display surface (82) of which can be divided into n display regions (84-87) and the width of which is greater than 4 cm, these display regions being separated from one another by interstices (90-92) that are at least 2 mm wide, where n is an integer greater than or equal to three;
• a plurality of call buttons (34-37), each embodied by a pushbutton, which are arranged on the periphery of the screen in proximity to a respective display region of the screen, each of the pushbuttons being reversibly displaceable by a visitor's finger between a depressed position and a rest position;
- a control unit (60) programmed for:
• controlling the simultaneous display, in each of the display regions (84-87), of an identifier of an apartment located inside the residential building;
• in response to the displacement of one of the pushbuttons into its depressed position, triggering the establishment of a voice communication via the speaker (26) and the microphone (28) between a visitor present in front of the intercom and a resident located inside the apartment, the identifier of which is displayed inside the display region closest to the depressed pushbutton;
- a vandal-resistant panel (54) having a front face (52) that is intended to be exposed directly to the outside, this panel including holes (116-119) through which each of the pushbuttons passes and a through-window (102) that is located in front of the common screen (80) such that each display region in proximity to a pushbutton is visible from the outside to the visitor,
**characterized in that** the window includes a grille (103) which divides this window (102) into at least n openings (108-111), each with a width of less than 3 cm, this grille including to this end main bars (104-106) which separate the openings from one another, each main bar running solely in front of a respective interstice (90-92) between two display regions (84-87).

2. Label holder for an intercom according to Claim 1, this label holder including:
- a common screen (80), the display surface (82) of which can be divided into n display regions (84-87) and the width of which is greater than 4 cm, these display regions being separated from one another by interstices (90-92) that are at least 2 mm wide, where n is an integer greater than or equal to three;
- an electronic circuit (24) that is able to display simultaneously, in each of the display regions (84-87), an identifier of an apartment located inside the residential building;
- a plurality of call buttons (34-37), each embodied by a pushbutton, which are arranged on the periphery of the screen in proximity to a respective display region of the screen, each of the pushbuttons being reversibly displaceable by a visitor's finger between a depressed position and a rest position;
- a vandal-resistant panel (54) having a front face (52) that is intended to be exposed directly to the outside, this panel including holes (116-119) through which each of the pushbuttons passes and a through-window (102) that is located in front of the common screen (80) such that each display region in proximity to a pushbutton is visible from the outside to the visitor,
**characterized in that** the window includes a grille (103) which divides this window (102) into at least n openings (108-111), each with a width of less than 3 cm, this grille including to this end main bars (104-106) which separate the openings from one another, each main bar running solely in front of a respective interstice (90-92) between two display regions (84-87).

3. Label holder according to Claim 2, wherein, for each opening, the label holder includes a wall (142-145) that is transparent to visible light, and which completely blocks this opening (108-111) and is flush with the front face (52) of the panel, this transparent wall being surrounded, at least over a portion of its periphery, by a shoulder interposed between the surface (82) of the screen (80) and the rear face of one of the main bars or of an edge of the panel.

4. Label holder according to Claim 3, wherein the label holder includes a common base (148) which mechanically connects all of the transparent walls (142-145) of all of the openings to one another with no degree of freedom, this common base being interposed between the vandal-resistant panel and the surface (82) of the screen.

5. Label holder according to any one of Claims 2 to 4, wherein the grille (103) further includes secondary bars (176), each of which runs in front of one of the display regions from a main bar located on one side of the display region to another main bar or an edge of the window located on the opposite side of this display region, the smallest width of each secondary bar being at least two times smaller than the smallest width of a main bar.

6. Label holder according to any one of Claims 2 to 5, wherein the length of each opening (108-111) is greater than 4 cm.
